# EUROPÄISCHE PATENTSCHRIFT

(11) **EP 2 290 355 B1**
(45) Veröffentlichungstag und Bekanntmachung des Hinweises auf die Patenterteilung: **30.05.2018**
(21) Anmeldenummer: 10171690.0
(22) Anmeldetag: 03.08.2010
(51) Int. Cl.: G01N 21/90

(54) **Vorrichtung und Verfahren zum Inspizieren etikettierter Gefäße**
Device and method for inspecting labelled containers
Dispositif et procédé destinés à l'inspection de récipients étiquetés

(30) Priorität: 28.08.2009 DE 102009039254
(43) Veröffentlichungstag der Anmeldung: 02.03.2011
(73) Patentinhaber: Krones AG, 93073 Neutraubling (DE)
(72) Erfinder: Niedermeier, Anton, 93073 Neutraubling (DE); Kwirandt, Rainer, 93073 Neutraubling (DE)
(74) Vertreter: Grünecker Patent- und Rechtsanwälte PartG mbB

(56) Entgegenhaltungen:
- EP-A1- 1 176 416
- EP-A2- 1 724 569
- EP-A2- 1 779 096
- DE-A1-102006 034 432
- US-A- 5 987 159

## Beschreibung

Die Erfindung betrifft eine Vorrichtung zum Inspizieren etikettierter Gefäße nach dem Oberbegriff des Anspruchs 1, und wie bekannt aus EP 1 176 416 A1, sowie ein Verfahren zum Inspizieren etikettierter Gefäße.

Um auf Flaschen oder anderen Gefäßen aufgeschrumpfte Folienetiketten zu überprüfen, ist es beispielsweise aus der Patentschrift DE 10 2005 023 534 B4 bekannt, zu inspizierende Flaschen auf einem linearen Förderband stehend durch eine Inspektionsvorrichtung mit zwei Kameras und einem Spiegelkabinett zu fahren, um das Etikett gleichzeitig über seinen gesamten Umfang abzubilden. Die beschriebene Vorrichtung umfasst ferner eine arenaartige Anordnung seitlicher Leuchtschirme, wobei in den beleuchtungs- und abbildungsseitigen Strahlengänge lineare Polarisationsfilter mit zueinander gekreuzten Polarisationsebenen vorgesehen sind, um störende Reflexionen der Leuchtschirme in den erfassten Bildern zu unterdrücken. Auch in der Patentschrift US 5 987 159 A ist ein Verfahren zum Inspizieren etikettierter Gefäße offenbart. Bei der Überprüfung der Folienetiketten auf das Vorhandensein von Löchern und/oder Rissen tritt jedoch insbesondere in Etikettenbereichen mit einer dem Füllgut ähnlichen Farbe das Problem auf, dass solche fehlerhaften Stellen aufgrund des schwachen Kontrasts zum umgebenden Etikett nur mit sehr hohem Aufwand bzw. nicht zuverlässig erkannt werden.

Diesem Problem versuchte man bisher durch Vergleich der gewonnenen Bilddaten mit Referenzaufnahmen des aufgeschrumpften Etiketts zu begegnen. In der Praxis ist dies jedoch dadurch erschwert, dass die Position des Etiketts auf der Flasche variieren kann, was gerade bei uneinheitlich gewölbten Flaschenoberflächen zu unterschiedlichen Verzerrungen des Etikettenaufdrucks führt. Es müssen dann große Toleranzbereiche zwischen überprüftem Etikett und Referenz erlaubt werden, wodurch die Zuverlässigkeit der Erkennung sinkt. Zudem werden bei häufigem Etikettenwechsel bzw. bei Änderungen des Aufdrucks viele Referenzaufnahmen und zusätzliche Kalibrierungen notwendig, die nur umständlich zu handhaben sind.

Es ist somit Aufgabe der Erfindung, hier Abhilfe zu schaffen.

Dies wird mit einer Vorrichtung erreicht, bei der die Beleuchtungseinrichtung so eingerichtet ist, dass sie das Etikett selektiv mit sichtbarem Licht und mit unsichtbarem Licht, insbesondere infrarotem Licht, bestrahlen kann. Im Infraroten ist der Kontrast eines Lochs zum umgebenden Etikett besonders hoch, da der Etikettenaufdruck im Infraroten weniger Licht absorbiert als der Flascheninhalt und daher im Bild hell erscheint. Somit kann die Beleuchtung je nach Etikettenaufdruck und Farbe des Flascheninhalts variiert werden, was die Trefferquote der Etiketteninspektion vor allem bei trübem Flascheninhalt erhöht.

Die Vorrichtung umfasst ferner eine Steuereinrichtung, die die Beleuchtungseinrichtung und die Kamera so ansteuern kann, dass das Etikett abwechselnd im sichtbaren Licht und im unsichtbaren Licht abgebildet wird. Dadurch kann eine Ansicht des Etiketts in zwei Aufnahmen mit verschiedener Kontrastierung abgebildet werden, so dass zusätzliche Bildinformation genutzt und die Qualität der Inspektion verbessert werden kann.

Die Vorrichtung umfasst ferner eine Auswerteeinrichtung, die im sichtbaren Licht und im unsichtbaren Licht aufgenommene Bilder des Etiketts mit einander vergleichen und/oder verrechnen kann. Dadurch können Löcher und Risse besonders kontrastreich dargestellt werden.

Vorzugsweise ist die Kamera so angeordnet, dass sie unter einem Winkel von mindestens 75° zur Hochachse des Gefäßes auf das Etikett blickt, und dass die Beleuchtungseinrichtung so eingerichtet ist, dass sie das Etikett unter einem Winkel von höchstens 60° zur Hochachse des Gefäßes schräg von oben und/oder von unten beleuchten kann. Dadurch können Reflexe an der Flaschenoberfläche bzw. auf dem Etikett unabhängig vom verwendeten Spektralbereich reduziert werden.

Vorzugsweise umfasst die Vorrichtung ferner mindestens einen beleuchtungsseitigen Polarisationsfilter, der Licht in einer ersten Richtung linear polarisiert, und mindestens einen abbildungsseitigen linearen Polarisationsfilter mit einer zweiten, im Wesentlichen senkrecht zur ersten Richtung orientierten Polarisationsrichtung. Damit können Reflexe an der Flaschenoberfläche bzw. am Etikett insbesondere im sichtbaren Spektralbereich besonders effektiv unterdrückt werden.

Vorzugsweise hat die Kamera eine Doppelbelichtungsfunktion, die es erlaubt, ein erstes Kamerabild zwischen zu speichern, so dass ein zweites Kamerabild aufgenommen werden kann, bevor das erste Kamerabild vollständig ausgelesen wurde. Dadurch können in schneller Abfolge zwei Aufnahmen des Etiketts mit einem nur geringen seitlichen Versatz im Kamerabild gemacht werden.

Die Beleuchtungseinrichtung kann ferner mindestens zwei getrennt ansteuerbare Leuchtschirme umfassen, die auf umfänglich im Wesentlichen entgegen gesetzte Bereiche des Etiketts gerichtet sind, um diese selektiv im Durchlicht bzw. Auflicht zu bestrahlen. Insbesondere bei klarem Füllgut können Löcher im Etikett dann wahlweise hell vor dunklem Hintergrund oder dunkel vor hellem Hintergrund dargestellt werden.

Die Steuereinrichtung kann die Beleuchtungseinrichtung und die Kamera dann ferner so ansteuern, dass die Etikettenbereiche abwechselnd im Durchlicht und im Auflicht abgebildet werden. Dadurch kann eine Ansicht des Etiketts in zwei Aufnahmen mit verschiedener Kontrastierung abgebildet werden, so dass zusätzliche Bildinformation genutzt und die Qualität der Inspektion verbessert werden kann.

Die Auswerteeinrichtung kann die im Durchlicht aufgenommenen Bilder des Etiketts mit im Auflicht aufgenommenen Bildern des Etiketts dann ferner vergleichen und/oder verrechnen. Dadurch können Löcher und Risse besonders kontrastreich dargestellt werden.

Die technische Aufgabe wird ferner mit einem Verfahren mit folgenden Schritten gelöst: a) Beleuchten eines auf einem zu inspizierenden Gefäß insbesondere durch Aufschrumpfen angebrachten Etiketts mit sichtbarem Licht und Abbilden des so beleuchteten Etiketts in mindestens einem Kamerabild; und b) Beleuchten des Etiketts mit unsichtbarem, insbesondere infrarotem Licht und Abbilden des so beleuchteten Etiketts in mindestens einem Kamerabild. Bei trübem Flascheninhalt steigt insbesondere im Infraroten der Kontrast eines Lochs zum umgebenden Etikett, da der Etikettenaufdruck im Infraroten weniger Licht absorbiert als der Flascheninhalt und daher im Bild hell erscheint. Durch die unterschiedliche Beleuchtung können Bilddatensätze mit unterschiedlich starkem Kontrast zwischen Flascheninhalt und bedrucktem Etikett erstellt werden, was die Trefferquote der Etiketteninspektion erhöht.

Ferner umfasst das Verfahren folgenden Schritt: c) Vergleichen und/oder Verarbeiten der Kamerabilder, um Löcher und/oder Risse im Etikett zu erkennen. Durch direkten Vergleich sich entsprechender Bilder können Defekte im Etikett besonders kontrastreich dargestellt werden und sind somit leichter zu identifizieren.

Ferner sind folgende Schritte möglich: d) Beleuchten eines ersten umfänglichen Teilbereichs eines auf einem zu inspizierenden Gefäß insbesondere durch Aufschrumpfen angebrachten Etiketts und Abbilden eines zweiten umfänglichen Teilbereichs des so beleuchteten Etiketts im Durchlicht in mindestens einem Kamerabild; und e) Beleuchten des zweiten umfänglichen Teilbereichs des Etiketts und Abbilden des zweiten umfänglichen Teilbereichs im Auflicht in mindestens einem Kamerabild. Insbesondere bei klarem Füllgut können Löcher im Etikett dann wahlweise hell vor dunklem Hintergrund oder dunkel vor hellem Hintergrund dargestellt werden.

Vorzugsweise wird das Etikett in den Schritten d) und e) mit infrarotem Licht beleuchtet. Dadurch können Löcher besser abgegrenzt werden, da die meisten Farben der Folienetiketten IR-durchlässig sind. Dadurch sind sowohl auf dem Etikett als auch in den Löchern weniger störende Strukturen zu sehen.

Vorzugsweise wird im Schritt c) aus dem im Schritt b) aufgenommenen Kamerabild eine Maske zur Eingrenzung der Löcher und/oder Risse erzeugt. Dadurch kann eine detaillierte Untersuchung bzw. Analyse der Daten auf verdächtige Bereiche beschränkt und Rechenkapazität effektiver genutzt werden.

Vorzugsweise werden die Kamerabilder in den Schritten a) und b) bzw. in den Schritten d) und e) mit einem zeitlichen Abstand von höchstens 1 ms, insbesondere höchsten 500 µs, voneinander aufgenommen. Dadurch ist das Etikett in jeweils zu vergleichenden Aufnahmen weitgehend mit identischer perspektivischer Verzerrung abgebildet, wodurch die Auswertung der Bilder erleichtert wird.

Eine bevorzugte Ausführungsform der Erfindung ist in der Zeichnung dargestellt. Es zeigen:

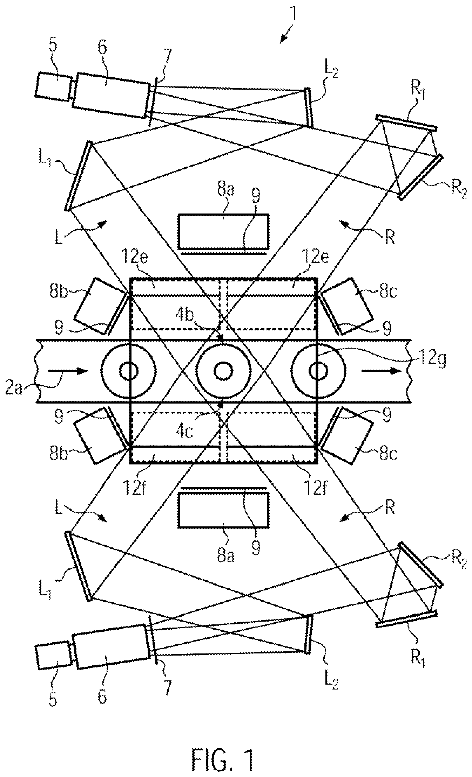

Figur 1 eine schematische Draufsicht auf eine erfindungsgemäße Ausführungsform
Figur 2 einen schematische Vorderansicht der Anordnung aus Figur 1
Figur 3 eine schematische Ansicht eines Leuchtschirms mit Fresnellinse von unten.

Die Vorrichtung 1 umfasst ein gerade verlaufendes Förderband 2 zum kontinuierlichen Fördern etikettierter Flaschen 3 oder anderer Gefäße aus Glas, Kunststoff, oder einem anderen geeigneten, lichtdurchlässigen Material. Die Mantelflächen der Flaschen 3 sind jeweils von einem Etikett 4 vollumfänglich umschlossen, insbesondere von einem aufgeschrumpften Folienetikett, das sich eng an die Außenkonturen der Flasche 3 anschmiegt. Das Etikett 4 kann aus einer wenigstens teiltransparenten Kunststofffolie bestehen, beispielsweise aus PE oder PP, die mit einem produkt- und/oder flaschenabhängigen Aufdruck versehen ist.

Zu beiden Seiten des Förderbands 2 und im Wesentlichen achsensymmetrisch dazu sind je zwei Kameras 5 mit Objektiven 6 und abbildungsseitigen linearen Polarisationsfiltern 7 übereinander angeordnet, wobei die Kameras 5 auf Spiegel L₂ bzw. R₂ blicken. Der im Wesentlichen vertikal angeordnete Spiegel L₂ bildet in Verbindung mit einem weiteren im Wesentlichen vertikalen Spiegel L₁ einen linken abbildungsseitigen Strahlengang L, während die entsprechend angeordneten Spiegel R₁ und R₂ einen rechten abbildungsseitigen Strahlengang R bilden. Die quer zum Förderband 2 ausgerichteten Strahlengänge L und R schneiden sich mit ihren optischen Achsen in etwa mittig über dem Förderband 2 unter einem gemeinsamen Winkel von beispielsweise 74° und bilden im Kreuzungsbereich eine Inspektionszone, in der die Mantelfläche einer zu untersuchenden Flasche 3 aus zwei umfänglich versetzten Richtungen auf die jeweils zugeordnete Kamera 5 abgebildet wird. Um gleich große Abbildungen zu erhalten, ist die Länge der Strahlengänge L und R ausgehend von den Kameras 5 bzw. den Objektiven 6 bis zum Schnittpunkt der optischen Achsen der beiden Strahlengänge L, R gleich lang. Die Höhenpositionen der Kameras 5 sind so gewählt, dass sie im Wesentlichen mittig und annähernd horizontal auf die zu untersuchende Flasche 3 bzw. das Etikett 4 blickt, insbesondere so dass der vertikale Beobachtungswinkel α zwischen dem Mittelstrahl L_{M}, R_{M} der Strahlengänge L, R und der Hauptachse 3a der Flasche 3 mindestens 75° beträgt.

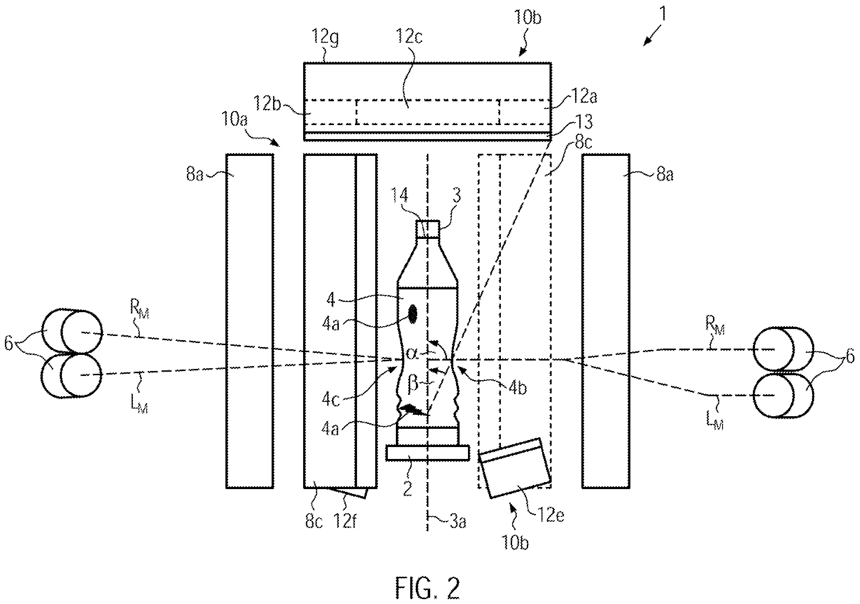

Wie aus Figur 2 hervorgeht, sind die Kameras 5 paarweise übereinander angeordnet, wobei die Strahlengänge L, R beispielsweise durch Kippen der Kameras 5 und/oder der Spiegel L₁, L₂ und R₁, R₂ vertikal ausgerichtet werden können. Diese Varianten sind in Figur 2 auf verschiedenen Seiten der Inspektionsvorrichtung 1 angedeutet, wobei die Spiegel L₁, L₂, R₁, R₂ sowie die Polarisationsfilter 7 zugunsten einer übersichtlicheren Darstellung weggelassen wurden. Die Kameras 5 könnten allerdings auch paarweise nebeneinander angeordnet sein.

Mit der bezüglich des Förderbands 2 achsensymmetrischen Anordnung der Kameras 5, der Objektive 6 mit Polarisationsfiltern 7 und der Spiegel L₁, L₂, R₁, R₂ wird die Flasche 3 umfänglich vollständig in jeweils vier überlappenden Kamerabildern abgebildet. Die Anzahl der Kameras 5 und der Flaschenansichten bzw. Kamerabilder kann jedoch auch davon abweichen.

Zwischen den beiden Strahlengängen L und R befindet sich jeweils ein mit der Hauptabstrahlrichtung im Wesentlichen rechtwinklig zur Förderrichtung 2a des Förderbands 2 und zur Hauptachse 3a der Flasche 3 ausgerichteter Leuchtschirm 8a. Zwischen den Strahlengängen L und dem Förderband 2 sowie zwischen den Strahlengängen R und dem Förderband 2 ist jeweils ein Leuchtschirm 8b bzw. 8c angeordnet. Die Hauptabstrahlrichtung der Leuchtschirme 8b und 8c schließt mit der Förderrichtung des Förderbandes 2 jeweils einen spitzen Winkel ein, wobei der Leuchtschirm 8b die zu untersuchende Flasche 3 bezogen auf die Förderrichtung 2a im Wesentlichen von der Rückseite her beleuchtet und der Leuchtschirm 8c von der Vorderseite. Die Lichtaustrittsfläche des Leuchtschirm 8a ist vorzugsweise doppelt so breit wie die der Leuchtschirme 8b und 8c und beleuchtet die Flasche 3 von der Seite quer zur Förderrichtung 2a. Die Leuchtschirme 8a, 8b 8c strahlen Licht im sichtbaren Spektralbereich (VIS) ab und sind auf beiden Seiten des Förderbands 2 jeweils im Wesentlichen halbkreisförmig um die Inspektionszone angeordnet; ihre Lichtaustrittsflächen sind im Wesentlichen parallel zur Flaschenhauptachse 3a.

Vor den Leuchtschirmen 8a, 8b und 8c ist jeweils ein lineares Polarisationsfilter 9 vorgesehen, dessen Polarisationsrichtung im Wesentlichen rechtwinklig zur Flaschenhauptachse 3a ausgerichtet ist. Die abbildungsseitigen Polarisationsfilter 7 vor den Kameraobjektiven 6 sind mit ihrer Polarisationsrichtung im Wesentlichen rechtwinklig zur Polarisationsrichtung der beleuchtungsseitigen Polarisationsfilter 9 ausgerichtet, d. h. es liegt eine gekreuzte Anordnung der paarweise zusammenwirkenden Polarisationsebenen vor.

Durch die gekreuzte Anordnung der Polarisationsebenen der linearen Polarisationsfilter 7 und 9 wird die Abbildung von an dem Etikett 4 reflektierten Lichtanteilen der Leuchtschirme 8a, 8b, 8c sowie eine direkte Lichteinstrahlung von den einer Kamera 5 bzw. ihren Strahlengängen jeweils gegenüberliegenden Leuchtschirmen unterdrückt. Nur am Etikett 4 diffus reflektierte Lichtanteile der Leuchtschirme 8a, 8b, 8c gelangen so zu den Kameras 5.

Die arenaartige Anordnung der Leuchtschirme 8a, 8b, 8c mit den Polarisationsfiltern 9 um die Inspektionszone herum bildet eine erste Leuchtschirmgruppe 10a einer Beleuchtungseinrichtung 10 zur umfänglich vollständigen und Reflex mindernden Beleuchtung des Etiketts 4.

Zur Beleuchtung des Etiketts 4 mit Licht im infraroten Spektralbereich (IR) von schräg oben und schräg unten ist ferner eine zweite Leuchtschirmgruppe 10b der Beleuchtungseinrichtung 10 mit oberen Leuchtschirmen 12a bis 12d und unteren Leuchtschirmen 12e, 12f vorgesehen. Die oberen Leuchtschirme 12a bis 12d sind oberhalb der Inspektionszone bzw. der zu untersuchenden Flasche 3 und vorzugsweise ringförmig um diese herum in einem gemeinsamen Gehäuse 12g angeordnet, wobei die seitlichen Leuchtschirme 12a und 12b einzeln und getrennt von dem vorderen und hinteren Leuchtschirmen 12c, 12d ansteuerbar sind. Die unteren Leuchtschirme 12e, 12f verlaufen zu beiden Seiten des Förderbands 2 an diesem entlang und sind ebenso getrennt voneinander ansteuerbar. Die Leuchtschirme 12a - 12f strahlen bevorzugt im nahen IR, in einem Bereich, in dem die Kameras 5 eine ausreichende Empfindlichkeit haben, insbesondere in einem Spektralbereich von 850 - 950 nm. Eine gegebenenfalls geringere Kameraempfindlichkeit im IR kann beispielsweise durch einen, insbesondere bei IR-Leuchtdioden möglichen, höheren Betriebsstrom und das Fehlen abschwächender Polarisationsfilter in den Strahlengängen der zweiten Leuchtschirmgruppe 10b kompensiert werden.

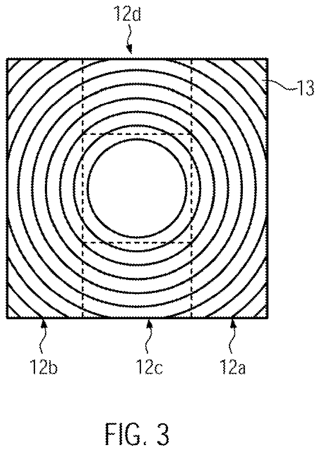

Die zweite Leuchtschirmgruppe 10b umfasst ferner Fresnellinsen 13, die das von den Leuchtschirmen 12a - 12f divergent abgestrahlte Licht bündeln und in Richtung des Etiketts 4 schräg nach unten bzw. oben ablenken. Hierbei kann eine Fresnellinse 13 die Lichtaustrittsflächen mehrerer Leuchtschirme 12a - 12d abdecken, wie in Figur 3 angedeutet. Es können aber auch getrennte Linsensegmente vorgesehen sein. Vorzugsweise trifft ein Anteil von mindestens 90% des von den Leuchtschirmen 12a - 12f abgestrahlten Lichts unter einem Winkel β von höchstens 75°, insbesondere nicht mehr als 60°, zur Flaschenhauptachse 3a von schräg oben bzw. unten auf das Etikett 4, um weitgehend zu vermeiden, dass gerichtete Lichtreflexe in die abbildungsseitigen Strahlengänge R, L gelangen und von den Kameras 5 erfasst werden. Die zweite Leuchtschirmgruppe 10b ist so eingerichtet, dass zumindest an parallel zur Flaschenhauptachse 3a orientierten Bereichen des Etiketts 4 gerichtet reflektiertes Licht nicht von den Kameras 5 erfasst wird. Dies kann mit den Fresnellinsen 13 in Kombination mit im Wesentlichen orthogonal ausgerichteten Leuchtschirmen erzielt werden, wie in Figur 2 für die oberen Leuchtschirme 12a - 12 d angedeutet und/oder durch Verkippen der Leuchtschirme, wie in Figur 2 für die unteren Leuchtschirme 12e, 12f angedeutet.

Die fokussierende bzw. bündelnde Wirkung der Fresnellinsen 13 wirkt der Strahldivergenz der Leuchtschirme 12a - 12f entgegen und reduziert im Bereich des Etiketts 4 die Abnahme der Beleuchtungsstärke mit zunehmendem Bestrahlungsabstand von den einzelnen Leuchtschirmen 12a - 12f. Dies führt zu einer gleichmäßigen Ausleuchtung des Etiketts 4.

Die zweite Leuchtschirmgruppe 10b eignet sich sowohl zum umfänglich vollständigen Ausleuchten des Etiketts 4, nämlich bei gleichzeitigem Betrieb aller Leuchtschirme 12a - 12f oder zumindest der Leuchtschirme 12a, 12b, 12 e und 12f, als auch zum selektiven, halbseitigen Beleuchten des Etiketts 4, nämlich bei gemeinsamem Betrieb der jeweils auf einer Seite des Förderbands 2 angeordneten Leuchtschirme 12a und 12e bzw. 12b und 12f. Das schräg von oben und unten einfallende Licht verhindert dabei eine Schattenbildung an horizontal verlaufenden Oberflächenstrukturen, wie Griffmulden, Rippen und Wülsten.

Die Leuchtschirme 8a - 8c und 12a - 12f umfassen vorzugsweise Leuchtdiodenpaneele für den sichtbaren bzw. infraroten Spektralbereich, wobei im sichtbaren Bereich verschieden farbige Leuchtdioden, z. B. in den Farben Rot, Grün und Blau, kombiniert werden können. Die Beleuchtungseinrichtung 10 könnte jedoch zumindest teilweise durch Kombination von VIS-Leuchtdioden und IR-Leuchtdioden in mindestens einem gemeinsamen Leuchtschirm 8a - 8c, 12a - 12f gebildet werden. Es ist sowohl denkbar, getrennt ansteuerbare IR-Leuchtdioden in mindestens einen der Leuchtschirme 8a - 8c zu integrieren, als auch getrennt ansteuerbare VIS-Leuchtdioden in mindestens einen der Leuchtschirme 12a - 12f. Außerdem könnten auch andere gepulste Lichtquellen verwendet werden. Ebenso ist es möglich, die mittleren Leuchtschirme 12c, 12 d nicht vorzusehen oder einen zentralen Bereich zwischen den seitlichen Leuchtschirmen 12a, 12 b abzublenden.

Die Polarisationsfilter 7 sind für sich genommen sowohl im VIS als auch im verwendeten IR lichtdurchlässig, also für beide Leuchtschirmgruppen 10a, 10b geeignet. Ferner können auch die beleuchtungsseitigen Polarisationsfilter 9 sowohl bezüglich ihres eigenen Transmissionsverhalten als auch bezüglich der Lichtabschwächung bei gekreuzten Polarisationsebenen für beide Gruppen 10a, 10b ausgelegt sein, insbesondere bei einer Kombination von VIS- und IR-Leuchtdioden in den Leuchtschirmen 8a - 8c.

In Bereichen, in denen das Etikett mit einer Farbe ähnlich der des abgefüllten Produkts 14 bedruckt ist ermöglicht die IR-Beleuchtung in der Regel eine kontrastreichere Darstellung von Löchern bzw. Rissen 4a im Etikett 4 als mit der VIS-Beleuchtung, da Druckfarbstoffe infrarotes Licht in der Regel deutlich schwächer absorbieren als das abgefüllte Produkt 14, wie beispielsweise ein Fruchtsaft. Im infrarot belichteten Kamerabild erscheint das Etikett 4 dann heller als das durch ein Loch 4a im Etikett 4 durchscheinende Produkt 14. Dieser Effekt wird noch dadurch unterstützt, dass Druckfarben meist teiltransparent auf weiße Etikettenfolie gedruckt sind, die infrarotes Licht kaum absorbiert jedoch in starkem Maße diffus in die Abbildungsstrahlengänge L, R zu den Kameras 5 hin streut.

Zur selektiven Ansteuerung der Beleuchtungseinrichtung 10, insbesondere der Leuchtschirmgruppen 10a, 10b und/oder der halbseitig gruppierten Leuchtschirme 12a und 12e bzw. 12b und 12f, im gepulsten Betrieb und zum Auslösen der Kameras 5 ist eine Steuereinheit 15 (nicht dargestellt) vorgesehen, zum Auslesen von Bilddatensätzen aus den Kameras 5 und zum Auswerten der zugehörigen Kamerabilder eine Auswerteeinheit 16 (nicht dargestellt), mit der Bilddatensätze dargestellt, verglichen, bearbeitet und miteinander verrechnet werden können, beispielsweise durch Subtraktion oder Division. Die Funktionen der Steuereinheit 15 und der Auswerteeinheit 16 könnten allerdings auch in einer Einheit zusammengefasst oder auf eine beliebige Anzahl von Einheiten verteilt werden.

Die Kameras 5 sind beispielsweise als CCD-Kameras mit einem Flächenarray ausgebildet und sowohl im VIS als auch im IR empfindlich, insbesondere in einem Spektralbereich von 380 - 1000 nm. Die Kameras 5 haben vorzugsweise eine Doppelbelichtungsfunktion, die erlaubt, dass zwei getrennt auswertbare Kamerabilder kurz hintereinander aufgenommen werden können, insbesondere innerhalb eines Zeitraums von 1 ms. Dabei kann der Datensatz des zweiten Kamerabilds erzeugt werden, bevor der Datensatz des ersten Kamerabilds vollständig aus der Kamera 5 ausgelesen ist. Die Doppelbelichtungsfunktion ermöglicht somit eine Zwischenspeicherung von Bilddaten in der Kamera, um zwei Aufnahmen des Etiketts 4 mit möglichst geringem seitlichen Versatz der sich durch den Bildbereich bewegenden Flasche 3 zu erhalten. Das vergleichsweise zeitraubende Auslesen der Bilddaten kann dann erfolgen, bevor die nächste Flasche 3 die Inspektionszone erreicht. Alternativ können aber auch zusätzliche Kameras 5 vorgesehen werden, um mehrere Kamerabilder in kurzen Zeitabständen bzw. gleichzeitig aufzunehmen.

Mit der beschriebenen Ausführungsform können somit durch geeignete Triggerung der Beleuchtungseinheit 10 in schneller Folge zwei vollumfängliche Panoramaaufnahmen des Etiketts 4 basierend auf je vier überlappenden Einzelbildern erstellt werden.

Verstellmöglichkeiten zur Optimierung der Neigung und Drehwinkel der Leuchtschirme bzw. Polarisationsfilter sind allgemein bekannt und daher nicht näher beschrieben. Zur weiteren Optimierung können nicht etikettierte Flaschenbereiche durch Blenden abgedeckt werden.

Die Kombination der Leuchtschirmgruppen 10a und 10b bietet den Vorteil, dass reflexarme Beleuchtungsstrahlengänge für unterschiedliche Spektralbereiche unabhängig voneinander und kostengünstig ausgebildet werden können, insbesondere im Vergleich zu kombinierten Strahlengängen mit breitbandigen VIS/IR-Polarisationsfiltern.

Das Ausführungsbeispiel bietet eine maximale Flexibilität durch selektive Bestrahlung in unterschiedlichen Spektralbereichen und gegebenenfalls von umfänglichen Teilbereichen 4b, 4c des Etiketts 4. Je nach Anforderung kann aber eine der Leuchtschirmgruppen 10a, 10b ausreichend sein. Ebenso kann es ausreichend sein, das Etikett 4 lediglich bei Beleuchtung in unterschiedlichen Spektralbereichen im Auflicht abzubilden. Wie nachfolgend beschrieben, ergeben sich Vorteile bei einem Wechsel des Spektralbereichs vor allem bei trüben Produkten 4, während sich eine halbseitige Beleuchtung und Aufnahme im Durchlicht bzw. Auflicht vor allem für klaren Produkte 4 eignet.

Durch Variation der Beleuchtungssteuerung und entsprechender Bildauswertung können mit der erfindungsgemäßen Inspektionsvorrichtung 1 beispielsweise die nachfolgend beschrieben Arbeitsweisen abgedeckt werden:
Insbesondere bei trübem Füllgut wird von den zu inspizierenden Flaschen 3 vorzugsweise je ein umfängliches Panoramabild bei infraroter und bei sichtbarer Beleuchtung im Auflicht in möglichst schneller Abfolge hintereinander aufgenommen. Zu diesem Zweck werden die Flaschen 3 mit geeignetem Abstand nacheinander und kontinuierlich auf dem Förderband 2 in die Inspektionszone transportiert und dort inspiziert. Sobald die jeweilige Flasche 3 eine bestimmte Inspektionsposition im Bildbereich der Kameras 5 erreicht, wird die Beleuchtungseinheit 10 von der Steuereinheit 15 zunächst zur Abgabe eines VIS-Lichtblitzes, im Beispiel mit den Leuchtschirmen 8a - 8c, und zur Aufnahme eines ersten Panoramabilds des Etiketts 4 mit den Kameras 5 getriggert. Die erzeugten Bilddaten werden dabei in den Kameras 5, insbesondere in deren Flächenarrays, zwischengespeichert, so dass in schneller Abfolge, bereits vor dem vollständigen Auslesen der Bilddaten, mit den selben Kameras 5 eine zweite Aufnahme gemacht werden kann.

Mit einem Zeitabstand von höchstens 1 ms, vorzugsweise höchstens 500 µs, zum Triggerzeitpunkt des VIS-Lichtblitzes wird die Beleuchtungseinrichtung 10 zur Abgabe eines IR-Lichtblitzes getriggert, im Beispiel mit den Leuchtschirmen 12a - 12f. Die Kameras 5 nehmen während des IR-Lichtblitzes ein zweites Panoramabild des Etiketts 4 auf, wobei der räumliche Versatz der Flasche 3 im Kamerabild zwischen der ersten Aufnahme im sichtbaren Spektralbereich und der zweiten Aufnahme im infraroten Bereich durch die Doppelbelichtung der Kameras 5 bzw. den dadurch ermöglichten kurzen Zeitraum zwischen den Triggerzeitpunkten minimiert wird. Die Reihenfolge der Aufnahmen kann hierbei auch umgekehrt sein.

Die Bilddaten der VIS- und der IR-Aufnahme werden aus den Kameras 5 ausgelesen und in der Auswerteeinheit 16 verarbeitet, wobei das Auslesen des jeweils ersten Kamerabilds bereits während der Aufnahme des zweiten Kamerabilds beginnen kann. Die Kamerabilder können in der Auswerteeinheit 16 verglichen werden, wobei die in den IR- bzw. VIS-Bildern unterschiedlich stark kontrastierten Druckbereiche des Etiketts 4 die Wahrscheinlichkeit erhöhen, dass ein Loch 4a bzw. ein Riss im Etikett erkannt werden kann, insbesondere in Bereichen, in denen der Etikettenaufdruck eine ähnliche Farbe wie das Produkt 14 hat.

Es ist auch möglich, die IR- und VIS-Bilder zu filtern und/oder miteinander zu verrechnen, beispielsweise durch Subtraktion oder Division. Eine weitere Möglichkeit der Bildverarbeitung und Defekterkennung ist die Bildung einer Maske anhand einer Aufnahme, beispielsweise der IR-Aufnahme, zur Eingrenzung von potentiellen Defektzonen im Etikett 4 und deren anschließender detaillierter Überprüfung anhand der zweiten Aufnahme oder einer Kombination der IR- und VIS-Aufnahmen.

Ein alternatives Verfahren bietet sich ergänzend insbesondere bei klaren Produkten 14 an, indem von den zu inspizierenden Flaschen 3 je ein umfängliches Panoramabild bei halbseitiger, insbesondere infraroter Beleuchtung in möglichst schneller Abfolge hintereinander aufgenommen wird. Hierbei ist das Vorgehen generell wie oben beschrieben. Allerdings werden zum ersten Triggerzeitpunkt nur Leuchtschirme auf einer Seite des Förderbands 2 getriggert, beispielsweise die Schirme 12a und 12e, oder je nach Ausstattung der Leuchtschirme mit verschieden VIS-/IR-/UV-Leuchtdioden alternativ die Schirme 8a, 8b und 8c auf der entsprechenden Seite des Förderbands 2, wodurch der umfängliche Etikettenbereich 4b im Auflicht und der Bereich 4c im Durchlicht aufgenommen werden. Zum zweiten Triggerzeitpunkt werden nur die entsprechenden Leuchtschirme auf der anderen Seite getriggert, in Beispiel die Schirme 12b und 12f, wodurch der umfängliche Etikettenbereich 4c im Auflicht und der Bereich 4b im Durchlicht aufgenommen werden.

Durch diese Beleuchtung werden die umfänglich im Wesentlichen entgegen gesetzten Bereiche 4b, 4c des Etiketts 4 und damit auch gegebenenfalls vorhandene Löcher 4a wechselseitig im Durchlicht bzw. Auflicht von den Kameras 5 im Panoramabild abgebildet. Hierbei genügen zwei Triggerzeitpunkte, um das Etikett 4 vollumfänglich sowohl im Durchlicht als auch im Auflicht abzubilden.

Dies hat insbesondere bei klarem Produkt 14 zur Folge, dass die Löcher 4a im Durchlichtbild hell erscheinen, da die Beleuchtung der gegenüber liegenden Seite das Etikett 4 je nach Aufdruck teilweise durchdringt und die so beleuchtete Rückseite des Etiketts 4 durch die Löcher 4a zu sehen ist. Andererseits erscheinen die Löcher 4a im Auflicht dunkler als das Etikett 4, da die Rückstreuung im klaren Produkt 14 gering ist und die gegenüber liegende Seite des Etiketts 4 nicht beleuchtet wird. Dieser Effekt tritt je nach Durchmesser der Flasche 3 und Trübung des Produkts 14 abgeschwächt auch bei trüben Produkten 14 auf.

Werden einander entsprechende Durchlicht- und Auflichtbilder gefiltert und/oder in der Bildverarbeitung kombiniert, lassen sich Löcher 4a bzw. Risse besonders kontrastreich darstellen. Aus den Durchlicht- bzw. Auflichtbilder könnte, wie zuvor beschrieben, eine Maske zur Eingrenzung von potentiellen Defektzonen im Etikett 4 erzeugt werden. Möglichkeiten der Bildverarbeitung sind außerdem das Erzeugen von Falschfarben aus Graustufen zur besseren Visualisierung von Löchern und Rissen 4a.

Die halbseitige Beleuchtung ließe sich prinzipiell ebenso mit sichtbarem Licht herstellen. Die IR-Beleuchtung bietet jedoch den Vorteil, dass der Aufdruck bei der Bildauswertung bzw. Defekterkennung weniger stört, da die meisten Druckfarben im IR nur wenig absorbieren. Somit ist der Umriss bzw. die Fläche eines Lochs 4a im IR leichter gegenüber dem Etikettenaufdruck abzugrenzen, und zwar sowohl im Auflicht als auch im Durchlicht.

Je nach Anzahl der Kameras 5 bzw. der Möglichkeit zur Mehrfachbelichtung können vollumfängliche VIS- und IR-Beleuchtung und halbseitige Beleuchtung beliebig kombiniert werden.

Auch die Verwendung von UV-Licht an Stelle von IR-Licht ist möglich. Hierbei ist entscheidend, dass sich das Absorptionsverhalten des Etikettenaufdruck und des Produkt 4 im unsichtbaren Licht trotz ähnlicher Farbgebung in sichtbaren Licht voneinander unterscheidet.

## Patentansprüche

1. Vorrichtung (1) zum Inspizieren etikettierter Gefäße (3), mit:
- einer Beleuchtungseinrichtung (10) zum Beleuchten eines auf einem zu inspizierenden Gefäß (3) insbesondere durch Aufschrumpfen angebrachten Etiketts (4); und
- mindestens einer Kamera (5) zum Abbilden des beleuchteten Etiketts (4),
wobei die Beleuchtungseinrichtung (10) so eingerichtet ist, dass sie das Etikett (4) selektiv mit sichtbarem Licht und mit unsichtbarem Licht, insbesondere infrarotem Licht, bestrahlen kann,
**gekennzeichnet durch**
eine Steuereinrichtung (15), die die Beleuchtungseinrichtung (10) und die Kamera (5) so ansteuern kann, dass das Etikett (4) wechselweise im sichtbaren Licht und im unsichtbaren Licht abgebildet wird; und
eine Auswerteeinrichtung (16), die im sichtbaren Licht und im unsichtbaren Licht aufgenommene Bilder des Etiketts (4) mit einander vergleichen und/oder verrechnen kann.

2. Vorrichtung nach Anspruch 1, wobei die Kamera (5) so angeordnet ist, dass sie unter einem Winkel (α) von mindestens 75° zur Hochachse (3a) des Gefäßes (3) auf das Etikett (4) blickt, und dass die Beleuchtungseinrichtung (10) so eingerichtet ist, dass sie das Etikett unter einem Winkel (β) von höchstens 60° zur Hochachse (3a) des Gefäßes (3) schräg von oben und/oder von unten beleuchten kann.

3. Vorrichtung nach einem der vorigen Ansprüche, ferner umfassend mindestens einen beleuchtungsseitigen Polarisationsfilter (9), der Licht in einer ersten Richtung linear polarisiert, und mindestens einen abbildungsseitigen linearen Polarisationsfilter (7) mit einer zweiten, im Wesentlichen senkrecht zur ersten Richtung orientierten Polarisationsrichtung.

4. Vorrichtung nach mindestens einem der vorigen Ansprüche, wobei die Kamera (5) eine Doppelbelichtungsfunktion hat, die es erlaubt, ein erstes Kamerabild zwischen zu speichern, so dass ein zweites Kamerabild aufgenommen werden kann, bevor das erste Kamerabild vollständig ausgelesen wurde.

5. Verfahren zum Inspizieren etikettierter Gefäße (3), mit folgenden Schritten:
a) Beleuchten eines auf einem zu inspizierenden Gefäß (3) insbesondere durch Aufschrumpfen angebrachten Etiketts (4) mit sichtbarem Licht und Abbilden des so beleuchteten Etiketts (4) in mindestens einem Kamerabild,
**gekennzeichnet durch**
b) Beleuchten des Etiketts (4) mit unsichtbarem, insbesondere infrarotem Licht und Abbilden des so beleuchteten Etiketts (4) in mindestens einem Kamerabild; und
c) Vergleichen und/oder Verarbeiten der Kamerabilder, um Löcher und/oder Risse (4a) im Etikett (4) zu erkennen.

6. Verfahren nach Anspruch 5, wobei im Schritt c) aus dem im Schritt b) aufgenommenen Kamerabild eine Maske zur Eingrenzung der Löcher und/oder Risse (4a) erzeugt wird.

7. Verfahren nach einem der Ansprüche 5 bis 6, wobei die Kamerabilder in den Schritten a) und b) mit einem zeitlichen Abstand von höchstens 1 ms, insbesondere höchsten 500 µs, voneinander aufgenommen werden.

## Claims

1. An apparatus for inspecting labelled containers (3), comprising:
- an illumination unit (10) for illuminating a label (4) attached, in particular by shrinking on, to a container (3) to be inspected; and
- at least one camera (5) for imaging the illuminated label (4),
wherein the illumination unit (10) is configured such that it is able to selectively irradiate the label (4) with visible light and invisible light, in particular infrared light,
**characterized by**
a control unit (15) which is able to control the illumination unit (10) and the camera (5) such that the imaging of the label (4) takes place alternately in visible light and invisible light; and
an evaluation unit (16) which is adapted to be used for comparing the label images recorded in visible and invisible light, and/or for setting these images off against one another.

2. The apparatus according to claim 1, wherein the camera (5) is arranged such that it is pointed at the label (4) at an angle (α) of at least 75° relative to the vertical axis (3a) of the container (3), and wherein the illumination unit (10) is configured such that it is capable of illuminating the label at an angle (β), which does not exceed 60°, relative to the vertical axis (3a) of the container (3) obliquely from above and/or from below.

3. The apparatus according to one of the preceding claims, further comprising at least one illumination-side polarizing filter (9) which linearly polarizes light in a first direction, and at least one imaging-side linear polarizing filter (7) having a second polarizing direction which is oriented substantially orthogonal to the first direction.

4. The apparatus according to at least one of the preceding claims, wherein the camera (5) has a double exposure function which allows buffering of a first camera image so that a second camera image can be recorded before the first camera image has been fully read.

5. A method of inspecting labelled containers (3), comprising the following steps:
a) illuminating with visible light a label (4) attached, in particular by shrinking on, to a container (3) to be inspected, and imaging the thus illuminated label (4) in at least one camera image,
**characterized by**
b) illuminating the label (4) with invisible light, in particular infrared light, and imaging the thus illuminated label (4) in at least one camera image; and
c) comparing and/or processing the camera images so as to detect holes and/or fissures (4a) in the label (4).

6. The method according to claim 5, wherein in step c), the camera image recorded in step b) is used for producing therefrom a mask for delimiting the holes and/or fissures (4a).

7. The method according to one of the claims 5 to 6, wherein the camera images are recorded in steps a) and b) at time intervals of 1 ms at the most, in particular 500 µs at the most.

## Revendications

1. Installation (1) destinée à l'inspection de contenants étiquetés (3), comprenant :
- un dispositif d'éclairage (10) pour éclairer une étiquette (4) appliquée, notamment par rétraction, sur un contenant (3) à inspecter ; et
- au moins une caméra (5) pour reproduire l'image de l'étiquette (4) éclairée,
le dispositif d'éclairage (10) étant configuré de manière à pouvoir irradier l'étiquette (4) de façon sélective avec de la lumière visible et de la lumière non visible, notamment de la lumière infrarouge,
**caractérisée par**
un dispositif de commande (15), qui est en mesure de commander le dispositif d'éclairage (10) et la caméra (5) de manière à ce que l'étiquette (4) soit reproduite sous forme d'image, alternativement en lumière visible et en lumière non visible ; et
un dispositif de traitement de données (16), qui est en mesure de comparer et/ou d'exploiter par calcul les images reproduites de l'étiquette (4) en lumière visible et en lumière non visible.

2. Installation selon la revendication 1, dans laquelle la caméra (5) est agencée de manière à être dirigée en direction de l'étiquette (4) sous un angle (α) d'au moins 75° par rapport à l'axe vertical (3a) du contant (3), et en ce que le dispositif d'éclairage (10) est configuré de manière à pouvoir éclairer l'étiquette de façon oblique par le haut et/ou le bas, sous un angle (β) d'au plus 60° par rapport à l'axe vertical (3a) du contenant (3).

3. Installation selon l'une des revendications précédentes, comprenant, par ailleurs, au moins un filtre de polarisation (9) du côté éclairage, qui polarise linéairement la lumière dans une première direction, et au moins un filtre de polarisation linéaire (7) du côté reproduction de l'image, qui présente une deuxième direction de polarisation orientée sensiblement de manière perpendiculaire à ladite première direction.

4. Installation selon l'une des revendications précédentes, dans laquelle la caméra (5) possède une fonction de double exposition, qui autorise à effectuer une mémorisation intermédiaire d'une première image de caméra, de sorte qu'il est possible de reproduire une deuxième image de caméra avant que la première image de caméra n'ait été complètement lue.

5. Procédé destiné à l'inspection de contenants (3) étiquetés, comprenant les étapes suivantes :
a) éclairage d'une étiquette (4) appliquée, notamment par rétraction, sur un contenant (3) à inspecter, avec de la lumière visible, et reproduction de l'image de l'étiquette (4) ainsi éclairée dans au moins une image de caméra,
**caractérisé par**
b) l'éclairage de l'étiquette (4) avec de la lumière non visible, notamment de la lumière infrarouge, et reproduction sous forme d'image de l'étiquette (4) ainsi éclairée, dans au moins une image de caméra ; et
c) la comparaison des images de caméra et/ou le traitement de données des images de caméra, en vue de détecter des trous et/ou des déchirures (4a) dans l'étiquette (4).

6. Procédé selon la revendication 5, d'après lequel dans l'étape c), on produit, à partir de l'image de caméra reproduite dans l'étape b), un masque pour délimiter les trous et/ou les déchirures (4a).

7. Procédé selon l'une des revendications 5 à 6, d'après lequel les images de caméra sont relevées dans les étapes a) et b) avec un intervalle de temps d'au plus 1 ms, notamment d'au plus 500 µs.
